# EUROPEAN PATENT SPECIFICATION

(11) **EP 2 619 126 B1**
(45) Date of publication and mention of the grant of the patent: **14.05.2014**
(21) Application number: 11773874.0
(22) Date of filing: 23.09.2011
(51) Int. Cl.: B62B 3/10, B66F 7/28, B66F 9/18, B60P 3/12, B62B 3/06, B66F 7/24

(54) **VEHICLE SUPPORTING DEVICE**
FAHRZEUGHALTEVORRICHTUNG
DISPOSITIF DE SUPPORT DE VÉHICULE

(30) Priority: 24.09.2010 EP 10179488
(43) Date of publication of application: 31.07.2013
(73) Proprietor: M2IG Sp. z o.o., 60-532 Poznan (PL)
(72) Inventor: CZARTORYSKI, Michael Adam, PL-60-532 Poznan (PL); GROTENBERG, Mads, DK-2680 Solrød Strand (DK)
(74) Representative: Roerboel, Leif
(86) International application number: PCT/IB2011/054204
(87) International publication number: WO 2012/038934

(56) References cited:
- EP-A1- 0 405 230
- DE-A1- 10 319 803
- FR-A1- 2 340 837
- US-A- 4 632 629
- US-A- 4 778 333
- US-A- 5 988 974

## Description

### Technical field

The present invention relates to a vehicle supporting device and a method to lift and maneuver a vehicle, when the vehicle needs to be moved within a location e.g. a garage for repairs.

### Background art

Salvage of cars is known to be performed by means of large trucks with a heavy trailing device to salvage a damaged or defect car and bring it to a garage for repairs, while the car is rolling on a pair of its own rear wheels or front wheels, the other pair of wheels being supported by the trailing device.

In a car repair shop or garage, need may arise to move a car from one point to another point within the location using simpler equipment.

EP 0 405 230 B1 describes a lifting device for elevating and maneuvering vehicles before repair work is initiated.

The known lifting device comprises a carrier with four parallel support rails extending laterally from the carrier to support wheels mounted on either a front axle or a rear axle and to bring a vehicle to a suitable position in a garage.

A first coaxial set of support rails are permanently fixed to the carrier in their extended position and a second set of coaxial support rails can be extended to preferably same width as the first set, when the front or rear wheels abut the first set of support rails from one direction, whereby the second set of coaxial support rails are hydraulically drawn towards the same wheels from an opposite direction reducing a distance between the two sets of rails to become shorter than a wheel or tire diameter, before raising an end of a vehicle.

The known lifting device is teaching use of hydraulic cylinders to adjust said distance between support rails, and hydraulic cylinders to laterally extend/withdraw the second set of support rails, which cylinders add to the complexity and price of such device.

In FR 2 340 837 is disclosed a transport device for road transport of cars. The disclosed transport device is configured to be towed by a vehicle. The transport device is rather large and is both wider and higher than a normal sedan. The transport device is adapted to carry the full weight of the car to be transported free from the ground In essence the transport device is a transport trailer. It is furthermore equipped with supporting members for supporting the wheels of the car to be transported. These supporting members are attached at selected attachment points in a frame structure of the transport device.

Furthermore, US 5,988,974 discloses a lifting and towing apparatus for transporting cars.

### Summary of the invention

It is the object of the present invention to design a less complex and affordable supporting device which all garages could afford to buy, and which requires nothing more than a stacker or forklift normally found in garages, to raise and move a vehicle around in the location, manually or driven by an electromotor.

A further object of the invention is to overcome problems with vehicles, whereof the wheels to be raised are damaged or punctured due to collision, whereby wheels are no longer in coaxial alignment and require different support in the two sides of the vehicle.

This and further objects are fulfilled by a vehicle supporting device for a vehicle comprising a carrier structure and support members extending from the carrier structure and serving to support a vehicle by a pair of its wheels. Said carrier structure comprises a system of attachment points for the support members and provided on longitudinal surfaces of the carrier, said members protruding laterally to support said wheel, when supported, wherein the supporting device further comprises a fork opening configured to connect to a standard stacker or standard forklift, and wherein for each wheel a set of said support members are connected to selected ones of said attachment points to provide a suitable mutual distance and height of said members. The attachment points can be distributed horizontally and vertically in order to obtain said distance and height of support members depending on the nature of possible damage to a wheel.

Hereby is achieved a more flexible adjustment, especially of the height of the wheels when supported, for example in order to provide coaxial alignment of the wheels even when one of them is punctured or otherwise damaged, thereby minimizing stress on other parts of said vehicle, and at the same time facilitating movement of a vehicle by a standard forklift. Hence, a small affordable supporting device is provided, which requires nothing more than a stacker or forklift to raise and move a vehicle around in a location such as a garage, and which at the same time provides the possibility of supporting the wheels at different heights in order to overcome the stress and tension problems in vehicles, where the wheels to be raised are damaged or punctured.

In a preferred embodiment of the invention, at least one member of a set of support members has a cranked form like a crank handle, and the distance between wheel contacting surfaces on said support members can be made shorter than the outer diameter of a tire of a wheel, depending on the attachment points or receiving openings used and the angular positioning of the support members.

In a further embodiment of the invention, receiving openings are formed as at least one longitudinal slit in one of said longitudinal surfaces, wherein said slit may have notches to secure the position and avoid sliding of support members in the longitudinal direction of said slit. This feature makes it easy to insert support members in the slit, sliding them to abutment with the tires, and letting them engage in the adjacent notches.

Each support member is provided with a latching element preventing said member from moving out of engagement with a respective attachment point or opening, when in use. Said latching element is protruding from the support member such that in one angular position, the support member can engage with said attachment points or openings, and in another angular position the support member is latched. Consequently, the latching element prevents the support member from sliding out of the carrier structure by turning the support member to the in-use position.

The support member according to the invention has a round, oval, square or multi-facetted cross section and an inner end of the support member is hooked into or over an edge of the carrier structure at the attachment points. As an alternative to inserting support members into receiving openings, usually in the side surface of the carrier structure, said members could be attached by clamping over and around or sticking under an edge of the carrier.

In order to improve support of a wheel, the support member could have an outer end covered by a support pad, and said pad may be formed as a spade.

In yet another advantageous embodiment of the invention, a set of support members supporting one wheel has a locking device in the form of any type of chain, wire or a fish plate capable of maintaining a mutual distance of the support members not to be exceeded when lifted.

In a preferred embodiment the carrier structure is connected to a supporting frame via a rotary joint, wherein the supporting frame is so arranged relative to the carrier structure, that the carrier structure is rotatable relative to the supporting frame. Hereby the rotary joint between the carrier structure and the supporting frame provides increased maneuverability during use, because it will in essence act as the rotary joint of a trailer of a truck.

Preferably, the rotary joint is connected to a top part of the supporting frame. The supporting frame also further comprises two sidewalls extending from the top part, wherein the sidewalls are so arranged relative to each other that they are able to accommodate the forks of a standard stacker or a standard forklift between them. Hereby the sidewalls will act as guides for the forks of the stacker or forklift, and thereby ensure correct positioning of them during use of the supporting device.

The invention also comprises a method of lifting and maneuvering a vehicle in a garage, wherein a supporting device comprising a carrier structure is positioned under a vehicle, then for each wheel of a front or rear axle of the vehicle a set of supporting members are attached to attachment points of a surface of said structure and protrudes laterally therefrom, said members supporting a tire on said wheel from below, the wheel contacting surfaces of the support members allowing a shorter mutual distance than the outer diameter of said tire, and said distance is secured by a locking device interlocking the support members, and finally a maneuvering device, e.g. a stacker or a forklift, is brought into operational engagement with connection means such as fork openings in the carrier structure in order for a vehicle resting on the supporting device to be lifted and maneuvered.

The method according to the invention preferably comprises a step, wherein the support members and/or attachment points are chosen to adapt properly to a height and distance defined by an adjacent tire/wheel on a vehicle to be moved to a new place in the location.

The supporting device according to the invention is preferably used with the method according to the invention.

### Brief description of the drawings

A further understanding of the nature and advantages of the present invention may be realized by reference to the remaining portions of the specification and the drawings. In the following, preferred embodiments of the invention are explained in more detail with reference to the drawings, wherein
Figure 1 is a general view of a vehicle being lifted and maneuvered by means of a vehicle supporting device according to the invention and a standard maneuvering device,
Figure 2 is a schematic diagram of a first embodiment of a supporting device according to the invention,
Figure 3 is a partial view of one side of a carrier structure with attachment points in a vertical side surface,
Figures 4A-C show several embodiments of a support member according to the invention,
Figure 5A shows a cross sectional view of the use of a support member according to a second embodiment in Fig. 4A,
Figure 5B shows the use of a support member according to a third embodiment in Fig. 4B,
Figure 5C shows the use of a support member according to a fourth embodiment in Fig. 4C,
Figure 6 shows a semi-transparent top view of an embodiment of a supporting device, and
Figure 7 shows a cross sectional side view of the embodiment of the supporting device 1 illustrated in Fig. 6.

### Detailed description of preferred embodiments

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

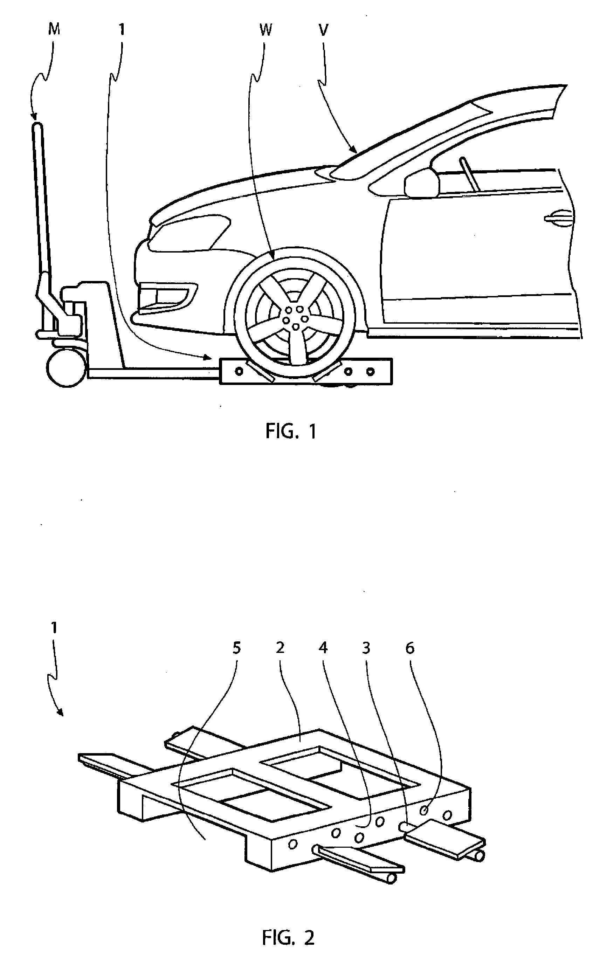

In one preferred embodiment of the invention shown in Figure 1 and 2, a supporting device 1 for a vehicle V comprises a carrier structure 2 and wheel supporting members 3 extending from surfaces 4 of the carrier structure 2, when in use, and serving to support a vehicle V by its front wheels W, as shown, or by its rear wheels. Furthermore, the carrier structure 2 comprises a fork opening 5 adapted to receive forks of a stacker or forklift M, the forklift M being able to lift and then maneuver the supporting device 1 supporting the front wheels W of a vehicle V, until a suitable place is found for the vehicle V in the location.

The carrier structure 2 can be configured e.g. in a rectangular or a U-shaped form as seen from above, and at the side surfaces 4 of the carrier 2 laterally oriented receiving openings 6 for support members 3 are provided along said side surfaces of the carrier 2. The support members 3 are insertable into said openings 6 to a suitable depth and are retained therein for the duration of bringing a vehicle to its destination point.

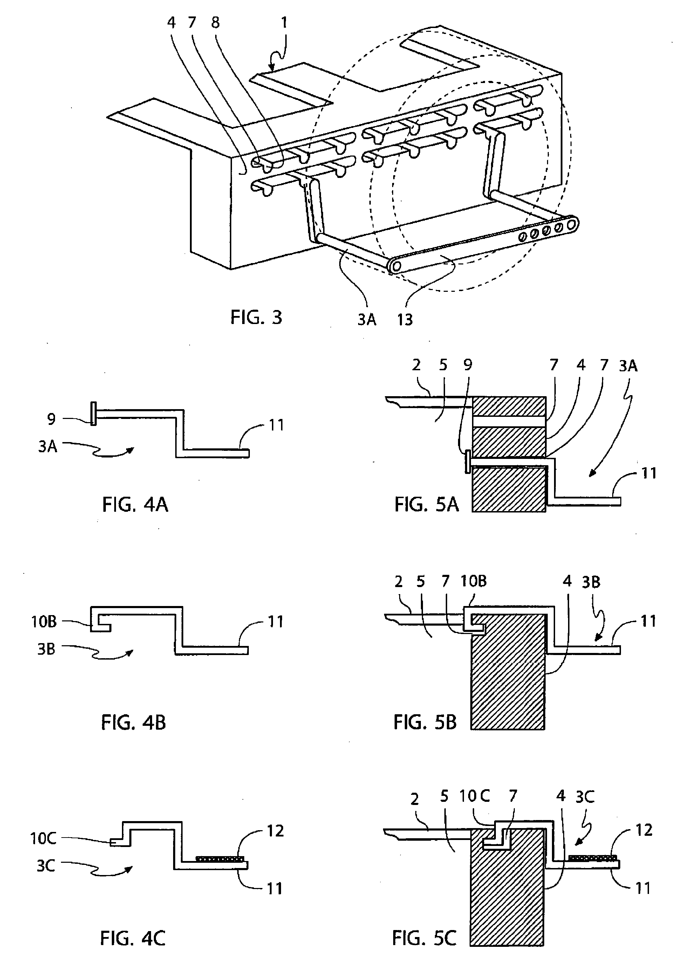

In an advantageous embodiment of the carrier 2 shown in Figure 3, the receiving openings, rather than being separate openings, are formed by a longitudinal slit 7, wherein a support member 3 can be received and slide sideways until it is allowed to engage in a suitable notch 8. In this manner, two support members 3 support a tire from opposite directions of the slit 7. Any number of slits 7 and/or separate openings 6 is within the scope of the invention and will allow for different heights of support from one side to the other side of a vehicle.

In order to prevent support members 3 from accidentally shifting out of the carrier 2, each member 3 is provided with a stop or latching element 9 (visible in Figures 4A and 5A) at the inner end of a support member 3A, wherein said member 3A can freely be inserted into the carrier, and then said element 9 is brought in active position by rotating said member 3A to a position, wherein it is not allowed to pass freely out of the carrier 2. Depending on the cross section of the support member 3A and the shape of a corresponding opening 6 or slit 7, said member 3A can be fixed in a required angular position relative to a tire to be supported (see. Fig. 2 and 3).

In another embodiment, the support member has a cranked form like a crank handle 3A, allowing easier fitting of the support members relative to a tire, wherein a set of support members 3 can be restricted to a maximum mutual distance by means of a fish plate or locking device 13 restricting the support surfaces of said members 3A to keep a mutual distance smaller than the diameter of a tire to be supported.

Referring now also to Figures 4B, 5B and 4C, 5C showing variations 3B, 3C of the cranked support member 3A, the inner end 10B is configured such that it shall be clamped around an edge of a carrier 2, or the end 10C can be positioned over the edge of the carrier 2 and engage under a further edge or overhang thereof.

In Figure 5C, the support surface on the outer end 11 of a support member 3C is further covered by a support pad 12 comprising a resilient material or a friction layer, or formed as a spade to enlarge the support surface.

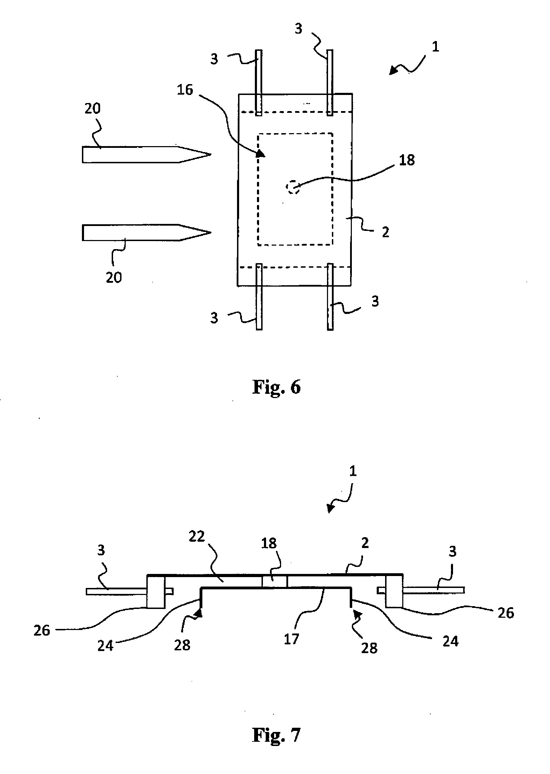

Fig. 6 shows a semi-transparent top view of another embodiment of a supporting device 1, wherein the carrier structure 2 is connected to a supporting frame 16 as indicated by the dashed lines. The carrier structure 2 is connected to a supporting frame 16 via a rotary joint 18. The supporting frame 16 is so arranged relative to the carrier structure 2, that the carrier structure 2 is rotatable relative to the supporting frame 16. By providing a supporting frame 16 relative to which the carrier structure 2 can rotate, an increased maneuverability is achieved. This increased maneuverability is especially important if the vehicle needs to be maneuvered in a small garage with limited space, because there will not always be enough room for turning the carrier structure in to its intended use position with the front (or back) wheels of a car on it. Also illustrated are the forks 20 of a standard forklift or a standard stacker M, which is used to move the vehicle. In the illustrated embodiment the supporting frame 16 has a rectangular form, but other shapes are also possible, for example cross formed frame(s).

Fig. 7 shows a cross sectional side view of the embodiment of the supporting device 1 illustrated in Fig. 6. As illustrated the supporting frame 16 is so arranged relative to the carrier structure 2 that a gap 22 is formed between them. This gap 22 between the supporting frame 16 and the carrier structure 2 allows the carrier structure to rotate freely (i.e. without friction) relative to the supporting frame 16 during use. The sidewalls 24 of the support frame 16 extend downwardly from the top part 17 of the supporting frame 16. Preferably, the ends 28 are substantially flush with the bottom part 26 of the carrier structure 2, so that both the ends 28 of the sidewalls 24 of the supporting frame and the bottom part of the carrier structure 2 touches the ground, when the supporting device 1 is placed in its intended use position on the ground. The ends 28 of the sidewalls 24 may be provided with a coating made from for example rubber or other suitable material in order to provide stability of the supporting device 1, when it is placed on the ground in its intended use position. The ground could for example be the floor of a garage. The sidewalls 24 are placed at a sufficiently large distance from each other that the forks 20 of a standard stacker or a standard forklift M is able to fit between them. Hereby they also will act as a guide for the forks 20 of the standard stacker or standard forklift M during insertion of the forks 20 into the supporting device 1.

### LIST OF REFERENCE NUMERS

In the following is given a list of reference numbers that are used in the detailed description of the invention.
- V: vehicle,
- W: wheels of the vehicle,
- M: standard stacker or standard forklift,
- 1: supporting device,
- 2: carrier structure,
- 3: wheel supporting means,
- 3A, 3B, 3C: variants of support members,
- 4: surface of carrier structure,
- 5: fork opening,
- 6: receiving openings for the wheel supporting members,
- 7: slit for the wheel supporting members,
- 8: notch,
- 9: stop or latching element,
- 10B,10C: inner end of the wheel supporting members 3B, 3C,
- 11: outer end of wheel supporting member,
- 12: support pad,
- 13: fish plate or locking device,
- 16: supporting frame,
- 17: top part of supporting frame,
- 18: rotary joint,
- 20: forks of a forklift,
- 22: gap between the supporting frame and the carrier structure,
- 24: sidewalls of supporting frame,
- 26: bottom part of the carrier structure, and
- 28: ends of the sidewalls of the supporting frame.

## Claims

1. Supporting device (1) for a vehicle (V) comprising a carrier structure (2) and support members (3) extending from the carrier structure (2) and serving to support a vehicle by a pair of its wheels (W), said carrier structure (2) comprising a system of attachment points (6) for the support members (3) and provided on longitudinal surfaces (4) of the carrier (2), said members (3) protruding laterally to support said wheel (W), when supported, **characterized in that** the supporting device (1) further comprises a fork opening (5) configured to connect to a standard stacker or a standard forklift (M), and wherein for each wheel (W) a set of said support members (3) are connected to selected ones of said attachment points (6) to provide a suitable mutual distance and height of said members (3).

2. Supporting device (1) according to claim 1, wherein at least one of a set of support members (3) has a cranked form like a crank handle, and wherein the distance between wheel contacting surfaces on said support members (3) can be made shorter than the outer diameter of a tire on a wheel (W), depending on the attachment points or receiving openings used and rotation of the support members (3).

3. Supporting device (1) according to claim 2, wherein said receiving openings (6) are formed as at least one longitudinal slit (7) in one of said longitudinal surfaces (4), wherein said slit (7) may have notches (8) to secure the position and prevent sliding of support members (3) in the longitudinal direction of said slit (7).

4. Supporting device (1) according to one of the previous claims, wherein each support member (3A) is provided with a latching element (9) preventing said member (3A) from accidentally moving out of engagement with a corresponding attachment point or opening, when in use.

5. Supporting device (1) according to claim 4, wherein said latching element (9) is protruding from the support member (3A) such that in one angular position the support member (3A) can engage with said attachment points or openings, and in another angular position the support member (3A) is latched.

6. Supporting device (1) according to one of claims 1-3, wherein the support member (3) is formed with a round, oval, square or multi-facetted cross section and an inner end (10) of the support member (3) is hooked into or over an edge of the carrier structure (2) at the attachment opening (6), and wherein the attachment openings are configured to match the cross section of the support member (3).

7. Supporting device (1) according to one of the previous claims, wherein each support member (3) has an outer end (11) with a support surface covered by a support pad (12).

8. Supporting device (1) according to claim 7, wherein the support member (3) and the support pad (12) is formed as a spade.

9. Supporting device (1) according to one of the previous claims, wherein said set of support members (3A) supporting one wheel (W) has a locking device (13) in the form of any type of chain, wire or a fish plate capable of maintaining a mutual distance of the support members (3A) not to be exceeded when lifted.

10. Supporting device (1) according to any of the preceding claims, wherein the carrier structure (2) is connected to a supporting frame (16) via a rotary joint (18), wherein the supporting frame (16) is so arranged relative to the carrier structure (2), that the carrier structure (2) is rotatable relative to the supporting frame (16).

11. Supporting device (1) according to claim 10, wherein the rotary joint (18) is connected to a top part (17) of the supporting frame (16) and wherein the supporting frame (16) further comprises two sidewalls (24) extending from the top part (17) and so arranged relative to each other that they are able to accommodate the forks (20) of a standard stacker or a standard forklift (M) between them.

12. Method of lifting and maneuvering a vehicle (V) in a garage, wherein a supporting device (1) comprising a carrier structure (2) is positioned under a vehicle (V), then for each wheel (W) of a front or rear axle of the vehicle (V) a set of supporting members (3) are attached to suitable attachment points (6) of a surface of said structure and protrudes laterally therefrom, said members (3) supporting a tire on said wheel (W) from below, the wheel contacting surfaces of the support members (3) allowing a mutual distance less than the outer diameter of said tire, said distance being secured by mounting a locking device (13) interlocking the outer ends (11) of each set of support members (3A), and finally a maneuvering device (M) e.g. a stacker or a forklift is brought into operational engagement with fork openings (5) in the carrier structure (2) in order for a vehicle (V) supported by the supporting device (1), to be lifted and maneuvered.

13. Method according to claim 12, wherein the support members (3) and/or attachment points (6) are chosen to adapt properly to a height and distance defined by a corresponding tire/wheel (W) on a vehicle (V) to be moved at a location.

14. Method according to claims 12 or 13, wherein a defined distance between the support members (3) of each set is secured by a locking device in the form of any type of chain, wire or fish plate (13).

15. Method according to any of claims 12-14 making use of a vehicle supporting device (1) according to any of claims 1-11.

## Patentansprüche

1. Haltevorrichtung (1) für ein Fahrzeug (V) umfassend ein Trägerelement (2) und Halteelemente (3), die sich vom Trägerelement (2) erstrecken und dazu dienen, ein Fahrzeug durch ein Paar seiner Räder (W) zu stützen, wobei das Trägerelement (2) ein System von Befestigungspunkten (6) für die Halteelemente (3) umfasst und auf Längsflächen (4) des Trägers (2) vorgesehen ist, wobei die Elemente (3) seitlich hervorragen, um das Rad (W) zu stützen, wenn gestützt, **dadurch gekennzeichnet, dass** die Haltevorrichtung (1) ferner eine Gabelöffnung (5) umfasst, die zur Verbindung mit einem Standardstapler oder einem Standardgabelstapler (M) konfiguriert ist, und wobei für jedes Rad (W) ein Satz der Halteelemente (3) mit ausgewählten Befestigungspunkten (6) verbunden ist, um einen geeigneten gegenseitigen Abstand und Höhe der Elemente (3) bereitzustellen.

2. Haltevorrichtung (1) nach Anspruch 1, wobei mindestens einer von einem Satz Halteelemente (3) eine gekröpfte Form wie eine Handkurbel aufweist, und wobei der Abstand zwischen den Radkontaktflächen auf den Halteelementen (3) kürzer als der Außendurchmesser eines Reifens auf einem Rad (W) gemacht werden kann, je nach den verwendeten Befestigungspunkten oder Aufnahmeöffnungen und Drehung der Halteelemente (3).

3. Haltevorrichtung (1) nach Anspruch 2, wobei die Aufnahmeöffnungen (6) als wenigstens ein Längsschlitz (7) in einem der Längsflächen (4) gebildet sind, wobei der Schlitz (7) Einkerbungen (8) aufweisen mag, um die Position zu sichern und das Gleiten von Halteelementen (3) in der Längsrichtung des Schlitzes (7) zu verhindern.

4. Haltevorrichtung (1) nach einem der vorhergehenden Ansprüche, wobei jedes Halteelement (3A) mit einem Einrastelement (9) versehen ist, welches das Element (3A) daran hindert, sich bei Gebrauch versehentlich aus dem Eingriff mit einem entsprechenden Befestigungselement oder einer Öffnung herauszubewegen.

5. Haltevorrichtung (1) nach Anspruch 4, wobei das Einrastelement (9) vom Halteelement (3A) in einer solchen Weise hervorragt, dass in einer Winkelposition das Halteelement (3A) mit den Befestigungspunkten oder Öffnungen in Eingriff treten kann, und in einer anderen Winkelposition das Halteelement (3A) eingerastet ist.

6. Haltevorrichtung (1) nach einem der Ansprüche 1-3, wobei das Halteelement (3) mit einem runden, ovalen, viereckigen oder facettenreichen Querschnitt gebildet ist, und ein inneres Ende des Halteelements (3) in oder über eine Kante des Trägerelements (2) an der Befestigungsöffnung (6) eingehakt ist, und wobei die Befestigungsöffnungen so konfiguriert sind, dass sie zum Querschnitt der Halteelemente (3) passen.

7. Haltevorrichtung (1) nach einem der vorhergehenden Ansprüche, wobei jedes Halteelement (3) ein äußeres Ende (11) mit einer Stützfläche aufweist, die von einem Stützkissen (12) abgedeckt ist.

8. Haltevorrichtung (1) nach Anspruch 7, wobei das Halteelement (3) und der Stützkissen (12) als ein Spaten gebildet sind.

9. Haltevorrichtung (1) nach einem der vorhergehenden Ansprüche, wobei der Satz Halteelemente (3A), der einen Rad (W) stützt, eine Verriegelungsvorrichtung (13) in Form von jeglicher Art von Kette, Draht oder Lasche aufweist, die dazu imstande ist, einen gegenseitigen Abstand der Halteelemente (3A) beizubehalten, welcher nicht überschritten wird, wenn gehoben.

10. Haltevorrichtung (1) nach einem der vorhergehenden Ansprüche, wobei das Trägerelement (2) mit einem Stützrahmen (16) über ein Drehgelenk (18) verbunden ist, wobei der Stützrahmen (16) derart bezüglich des Trägerelements (2) angeordnet ist, dass das Trägerelement (2) bezüglich des Stützrahmens (16) drehbar ist.

11. Haltevorrichtung (1) nach Anspruch 10, wobei das Drehgelenk (18) mit einem Oberteil (17) des Stützrahmens (16) verbunden ist, und wobei der Stützrahmen (16) ferner zwei Seitenwände (24) umfasst, die sich vom Oberteil (17) erstrecken und derart bezüglich einander angeordnet sind, dass sie dazu fähig sind, die Gabeln (20) eines Standardstaplers oder eines Standardgabelstaplers (M) zwischen ihnen aufzunehmen.

12. Verfahren zum Heben und Manövrieren eines Fahrzeuges (V) in einer Garage, wobei eine Haltevorrichtung (1) umfassend ein Trägerelement (2) unter einem Fahrzeug (V) positioniert ist, denn für jedes Rad (W) einer Vorder- oder Hinterachse des Fahrzeuges (V) ein Satz Halteelemente (3) an geeigneten Befestigungspunkten (6) einer Oberfläche des Elements befestigt ist und davon seitlich hervorragt, wobei die Elemente (3) einen Reifen auf dem Rad (W) von unten stützt, wobei die Radkontaktflächen der Halteelemente (3) einen gegenseitigen Abstand erlauben, der kleiner als der Außendurchmesser des Reifens ist, wobei der Abstand durch Anbringen einer Verriegelungseinrichtung (13) gesichert wird, welche die äußeren Enden (11) jedes Satzes Halteelemente (3A) verriegelt, und schließlich eine Manövriereinrichtung (M), z.B. ein Stapler oder ein Gabelstapler, in Betriebseingriff mit Gabelöffnungen (5) im Trägerelement gebracht wird, damit ein von der Haltevorrichtung gestützte Fahrzeug (V) gehoben und manövriert werden kann.

13. Verfahren nach Anspruch 12, wobei die Halteelemente (3) und/oder Befestigungspunkte (6) zum richtigen Anpassen an einer Höhe und einem Abstand ausgewählt sind, die von einem entsprechenden Reifen/Rad auf einem Fahrzeug (V), das an einem Ort bewegt werden soll, definiert sind.

14. Verfahren nach Ansprüchen 12 oder 13, wobei ein definierter Abstand zwischen den Halteelementen (3) jedes Satzes von einer Verriegelungseinrichtung in Form von jeglicher Art von Kette, Draht oder Lasche (13) gesichert ist.

15. Verfahren nach einem der Ansprüche 12-14, das von einer Fahrzeughaltevorrichtung (1) nach einem der Ansprüche 1-11 Gebrauch macht.

## Revendications

1. Dispositif de support (1) pour un véhicule (V) comprenant une structure porteuse (2) et des éléments de support (3) qui s'étendent de la structure porteuse (2) et qui servent à supporter un véhicule à l'aide de deux de ces roues (W), ladite structure porteuse (2) comprenant un système de points d'attache (6) pour les éléments de support (3) et fournis sur des surfaces longitudinales (4) de la porteuse (2), lesdits éléments (3) portant en saillie latéralement afin de supporter ladite roue (W), lorsqu'elle est supportée, **caractérisé en ce que** le dispositif de support (1) comprend en outre une ouverture pour fourche (5) configurée pour lier à un chargeur standard ou un chariot standard (M), et dans lequel, pour chaque roue (W), un ensemble desdits éléments de support (3) sont liés à des points spécifiques sélectionnés parmi lesdits points d'attache (6) pour fournir une distance et une hauteur mutuelle convenable desdits éléments (3).

2. Dispositif de support (1) selon la revendication 1, dans lequel au moins l'un parmi un ensemble d'éléments de support (3) a une forme coudée, telle qu'une manivelle à main, et dans lequel la distance entre les surfaces de contact des roues sur lesdits éléments de support (3) peut être faite d'une dimension inférieure que le diamètre extérieur d'un pneu sur une roue (W), en fonction des points d'attache ou des ouvertures réceptrices utilisées et la rotation sur des éléments de support (3).

3. Dispositif de support (1) selon la revendication 2, dans lequel lesdites ouvertures réceptrices (6) sont formées comme au moins une fente longitudinale (7) dans une desdites surfaces longitudinales (4), dans lequel ladite fente (7) peut avoir des encoches (8) pour assurer la position et empêcher le glissement des éléments de support (3) dans la direction longitudinale de ladite fente (7).

4. Dispositif de support (1) selon l'une des revendications précédentes, dans lequel chaque élément de support (3A) est fourni d'un élément de verrouillage (9) empêchant ledit élément (3A) de se déplacer accidentellement hors d'engagement avec un point d'attache ou une ouverture correspondante, lors d'usage.

5. Dispositif de support (1) selon la revendication 4, dans lequel ledit élément de verrouillage (9) porte en saillie à partir de l'élément de support (3A) de manière à ce que, lorsqu'il se trouve dans une position angulaire, l'élément de support (3A) peut s'engrener avec lesdits points d'attache ou lesdites ouvertures, et lorsqu'il se trouve dans une autre position angulaire, l'élément de support (3A) est verrouillé.

6. Dispositif de support (1) selon l'une des revendications 1 à 3, dans lequel l'élément de support (3) est formé avec une section de coupe ronde, ovale, carrée ou de multiples facettes, et où une extrémité intérieure (10) de l'élément de support (3) est accrochée dans un bord de la structure porteuse (2) ou par-dessus celui-ci à l'ouverture d'attache (6), et où les ouvertures d'attache sont configurées pour correspondre à la section de coupe de l'élément de support (3).

7. Dispositif de support (1) selon l'une des revendications précédentes, dans lequel chaque élément de support (3) a une extrémité extérieure (11) avec une surface de support couverte par un coussin de soutien (12).

8. Dispositif de support (1) selon la revendication 7, dans lequel ledit élément de support (3) et ledit coussin de soutien (12) est formé comme une bêche.

9. Dispositif de support (1) selon l'une des revendications précédentes, dans lequel ledit ensemble d'éléments de support (3A) supportant une roue (W) a un dispositif de blocage (13) en forme de n'importe quel type de chaîne, de fil ou d'éclisse capable de maintenir une distance mutuelle des éléments de support (3A) à ne pas être excédée lorsque levés.

10. Dispositif de support (1) selon l'une des revendications précédentes, dans lequel ladite structure porteuse (2) est liée à un cadre de support (16) par un joint rotatif (18), dans lequel le cadre de support (16) est disposé de telle manière par rapport à la structure porteuse (2) que la structure porteuse (2) peut tourner par rapport au cadre de support (16).

11. Dispositif de support (1) selon la revendication 10, dans lequel le joint rotatif (18) est lié à une partie supérieure (17) du cadre de support (16) et dans lequel le cadre de support (16) comprend en outre deux parois latérales (24) qui s'étendent de la partie supérieure (17) et qui sont disposées l'une par rapport à l'autre de telle manière qu'elles peuvent accommoder les fourches (20) d'un chargeur standard ou d'un chariot standard (M) entre elles.

12. Procédé pour lever et manoeuvrer un véhicule (V) dans un garage, dans lequel un dispositif de support (1) comprenant une structure porteuse (2) est positionné sous un véhicule (V) et ensuite, pour chaque roue (W) d'un essieu avant ou un essieu arrière du véhicule (V), un ensemble d'éléments de support (3) sont attachés, à des points d'attache convenables (6) d'une surface de ladite structure et portent en saillie latéralement de là, lesdits éléments (3) supportant un pneu sur ladite roue (W) d'en dessous, étant donné que les surfaces de contact de roue des éléments de support (3) permettent une distance mutuelle inférieure au diamètre extérieur dudit pneu, ladite distance étant assurée par le montage d'un dispositif de blocage (13) verrouillant les extrémités extérieures (11) de chaque ensemble d'éléments de support (3A) et finalement, un dispositif de manoeuvre (M), par exemple un chargeur ou un chariot élévateur, est pris en engagement opérationnel avec des ouvertures pour fourches (5) dans la structure porteuse (2) de manière à ce qu'un véhicule (V) supporté par le dispositif de support (1) peut être levé et manoeuvré.

13. Procédé selon la revendication 12, dans lequel les éléments de support (3) et/ou les points d'attache (6) sont choisis pour s'adapter correctement à une hauteur et une distance définies par un pneu/une roue (W) correspondant(e) sur un véhicule (V) à être déplacé sur un emplacement.

14. Procédé selon l'une des revendications 12 ou 13, dans lequel une distance définie entre les éléments de support (3) de chaque ensemble est assurée par un dispositif de blocage dans la forme de n'importe quel type de chaîne, de fil ou d'éclisse (13).

15. Procédé selon l'une quelconque des revendications 12 à 14 qui utilise un dispositif de support de véhicule (1) selon l'une quelconque des revendications 1 à 11.
